Europäisches Patentamt

**European Patent Office**

Office européen des brevets

(11) Publication number: **0 056 725**

A2

(12) **EUROPEAN PATENT APPLICATION**

(21) Application number: **82300261.3**

(22) Date of filing: **19.01.82**

(51) Int. Cl.³: **H 01 M 4/04**
**H 01 M 4/88**

(30) Priority: **19.01.81 US 226454**
**19.01.81 US 226502**
**19.01.81 US 226527**

(43) Date of publication of application:
**28.07.82 Bulletin 82/30**

(84) Designated Contracting States:
**BE DE FR GB IT NL SE**

(71) Applicant: **MPD Technology Corporation**
**681 Lawlins Road**
**Wyckoff New Jersey 07481(US)**

(72) Inventor: **Bernstein, Philip**
**16 Stonehouse Road**
**Glen Ridge New Jersey 07028(US)**

(72) Inventor: **Coffey, James Peter**
**137 South Street Extension**
**Warwick New York 10990(US)**

(72) Inventor: **Varker, Alan Edward**
**Rd 1, Overhill Lane**
**Warwick New York 10990(US)**

(72) Inventor: **Arms, John Taylor**
**12 Hoffman Drive**
**Monroe New York 10950(US)**

(72) Inventor: **Goodell, Paul Douglas**
**234 Mulberry Street**
**Ridgewood New Jersey 07450(US)**

(72) Inventor: **Clark, William Donald Kennedy**
**19 Park Avenue**
**Warwick New York 10990(US)**

(74) Representative: **Dixon, Sarah et al,**
**c/o C H Greenstreet Thames House (Fifth Floor) Millbank**
**London SW1P 4QF(GB)**

(54) **Polymeric electrode.**

(57) A conductive polymeric electrode structure for electrochemical cells which comprises particles of electrode material encradled in a porous fibre-containing polymeric material is disclosed. The electrode is made by dry processing the electrode material, a polymeric pore-forming material which is soluble in aqueous media and a fibrillatable polymer to fibrillate the latter and form a homogeneous mixture, and dissolving out the pore-forming material.
Preferably the fibrillation and mixing are effected simultaneously.

COMPLETE DOCUMENT

obtain a uniform distribution of active material throughout the dispersion during processing. There are also constraints with respect to processing alternatives for fabricating the end product. For example, it is difficult to produce a membrane via a milling process using a liquid or paste. In order to fabricate a liquid or paste it must be applied to a support. Also, the polymeric binders prepared from liquid-based formulations tend to restrict exposure of the electrode material, which in turn tends to limit the capacity of electrodes made from such materials.

It has also been proposed, for example in U.S. Patent No. 3,898,099 to perform the fibrillation in non-aqueous liquid media such as Stoddard solvent. This procedure, however, tends to be hazardous because the flash point of the medium tends to be rather close to the temperatures required for fibrillation. For example, the flash point of Stoddard solvent at 100 to $110^{\circ}C$ is rather close to the temperature required for fibrillation of polytetrafluoroethylene (PTFE) at 75 to $100^{\circ}C$.

We have now found that a fibrous polymeric electrode structure can, with advantage, be formed by compounding the components by dry processing, that is to say in the absence of a liquid medium.

According to the present invention, a conductive polymeric structure comprising a particulate electrode material encradled in a porous, fibre-containing polymeric material is made by dry processing the electrode material with a polymeric pore-forming material which is soluble in aqueous media, a support polymer and a fibrillatable polymer to fibrillate the latter and form a homogeneous mixture and dissolving out the pore-forming material.

We find that addition of water to the formulated fibrous material to remove the pore-forming material does

# Polymeric Electrode

This invention relates to a polymeric electrode for electrochemical cells which comprises particles of an electrode material encradled in a porous, fibre-containing polymeric material, and, more particularly, to a method of producing such an electrode.

The use of polymers as binders and wet proofing agents in electrodes containing finely divided electrochemically active material is well known, and efforts have been made to minimise the amount of polymeric binder used and yet effectively bind the active particles. Fibrous polymers have been proposed for this purpose. In U.S. Patents Nos. 3,630,781 and 3,954,501, for example, electrodes prepared from a dispersion of a fluorocarbon polymer in a liquid such as water are disclosed. The dispersion, which is in essence an emulsion, is mixed with a surfactant and finely divided active material, and the mixture in a pasty or liquid consistency is used to coat or impregnate a structural material. The fluorocarbon is finely distributed within the liquid carrier, preferably on a colloidal level. During the process, the fluorocarbon is precipitated as a fibrous material, for example by freezing, increasing the pH, or by solvent extraction.

Existing processes for converting polymers to fibrous form from such liquid-based dispersions suffer from many problems. One of the most serious limitations of such processes is removal of the liquid in which the polymer is dispersed. This is an energy intensive step which tends to limit and complicate the process. In addition, the dispersion will probably contain a dispersing additive such as a surfactant, and such additives may have a detrimental effect on electrode performance. It also may be difficult to control or even not give rise to the problems that occur when it is present during fibrillation.

Advantageously, the fibrillatable polymer is converted to fibrous form in the presence of the electrode material at least, and preferably in the presence of all the components although fibrillation may, if desired, be wholly or partially effected before admixture of the components.

By "electrode material" is meant any material which exhibits electrode activity or may be activated to do so. Examples of suitable materials are silver, manganese, lead, nickel, cadmium, carbon, a platinum group metal or a mixture, compound or alloy of two or more of these elements. Manganese dioxide is a particularly suitable electrode material for use in the method of the present invention.

Preferably the electrode material is in the form of a fine powder. If manganese dioxide is the electrode material, all the particles will preferably pass a 100 mesh U.S. Standard screen (149 micron aperture) with from 60 to 70% passing a 325 mesh screen (44 micron aperture).

Since the polymeric structure is porous, it can accommodate changes in the shape and volume of the particles of electrode material that may occur during use. In addition, the fibres produced from the fibrillatable polymer tend to minimise losses of electrode material due to attrition.

If the electrode material used is not itself conductive, or if it is desired to impart additional conductivity to the polymeric structure, conductive carbon powder may be included with the materials that are to be dry processed and thus incorporated in the polymeric electrode structure. The electrode material may itself be carbon. Up to 25% by weight of the electrode (after removal of the pore-forming material) may be constituted by conductive carbon present in addition to other electrode material. Suitable forms of conductive carbon powder are acetylene black and graphite. Examples of commercially available conductive carbon powders are "Shawinigan" black (produced by Shawinigan Products Corp.), "Vulcan" and "Regal 160" (products of Cabot Corp.), "Ashland United" (product of Ashland Chemical Co.), and "Ketjen" black (product of Akzo Chemie NV).

To develop the porosity in the polymeric structure, after conversion of the fibrillatable polymer to fibres the pore-forming material is dissolved out leaving a frame-work of interconnecting pores. The dissolution may be effected using any suitable aqueous medium. The pore-forming material is also a polymer. As such it will be compatible with the other polymeric components of the mixture and serve as the medium in which the other components of the system may be worked and uniformly distributed. A further advantage of using a polymeric pore-forming material is that if, as preferred, fibrillation is effected in the presence of all the other components, it will be facilitated by the use of the polymeric pore-former, which may also act as a processing agent for the fibrillatable polymer during conversion of the latter to fibres. The pore former should also wet the surface of the electrode material as it is believed that this may contribute to the accessibility of the electrode material to gases, liquids etc. after removal of the pore former.

We prefer to use a pore-former that can be removed by water alone. Suitable water-soluble pore-forming materials are polyethylene oxide and polypropylene oxide. Polyethylene oxide which has a melting point below 75$^{\circ}$C, is freely soluble in water, and will serve as a processing agent in the fibrillation of fibrillatable polymers such as PTFE and polypropylene is particularly preferred. Preferably the type of polyethylene oxide used will have a molecular weight in the range from 100,000 to 1,000,000. Polyethyleneimine which may be removed with dilute sulphuric acid and polyacrylic acid which may be removed with dilute sodium hydroxide may also be used provided that the electrode material would not be adversely affected by the acid or alkali.

The amount of pore-forming material used is dependent on the degree of porosity desired in the final product. In general, the amount of pore-forming material employed will constitute at least 10% by weight of the mixture and preferably from 15 to 30%. The polymeric electrode structure itself preferably has a porosity of 70 to 80% by volume and to achieve this an equivalent volume % of pore forming material is necessary. In the case of polyethylene oxide, this corresponds to 15 to 50 weight %.

The fibrillatable polymer should not, of course, react with any of the other components of the mixture, and it should be inert in the environment in which the polymeric structure is to be used. Fluorocarbon polymers such as PTFE and fibrillatable polypropylene are particularly suitable for use as fibrillatable polymers in the method of the present invention. Suitable commercially available forms of PTFE are the powders sold by du Pont as Teflon 6A and 7A. Fibrillatable polypropylene is available for example as strands, tape and film which may be used as such or may be cut or chopped to appropriate size.

After removal of the pore-forming material, the fibrillatable polymer (now in fibrous form) may constitute from 0.5 to 5% by weight of the polymeric structure, typically from 1 to 2%.

The support polymer, like the fibrillatable polymer, should not react with any of the other components and should be inert in the environment in which the polymeric structure is to be used. The function of the support polymer is to reinforce the polymeric structure providing it with strength and structural integrity without loss of flexibility. The material or materials used as support polymer should thus be selected with this in mind and also bearing in mind that it is desirable for the fibrillatable polymer to be capable of dispersing in the support polymer. The following thermoplastic polymers either alone or in suitable combinations may be used as support polymer in the method of the present invention: polyolefins such as polyethylene, polypropylene, polybutylene, polyisobutylene or copolymers thereof with ethylacrylate and/or vinyl acetate; halogenated polyhydrocarbons and copolymers thereof; polyamides; polysulphones; polyacetates; polycarbonates; polyesters; cellulose esters; silicones. Of these materials the polyolefins are preferred since they are substantially saturated compounds and as such will be chemically inert, particularly towards the active material.

The proportions of the components should be such that after removal of the pore-forming material, the polymeric electrode structure consists predominantly of electrode material and conductive carbon (if any) i.e. comprises more than 50 wt. % of such material. Preferably the electrode material and conductive carbon (if any) will constitute from 70 to 99% by weight of the structure. More preferably, at least 80% by weight of the structure is electrode material and conductive carbon (if any). Typically, the polymeric electrode structure will consist of (in weight %) from 0.5 to 5% fibrillated polymer, from 0.5 to 25% conductive carbon and from 0.5 to 20% support polymer, the balance being electrode material.

As mentioned above, the fibrillatable polymer is preferably converted to fibrous form in the presence of the other components of the mixture. Fibrillation is achieved by mechanical working in the absence of a liquid medium i.e. by a dry processing technique. Such techniques are known per se and are disclosed for the production of powder products in, for example, U.S. Patents Nos. 3,838,092 and 4,071,946. Fibrillation may be achieved in standard polymer processing equipment such as a Banbury mixer or a ball mill. After fibrillation, the mixture will consist of discrete fibres distributed throughout a homogeneous matrix of pore-forming material, electrode material and support polymer and encradling the particles of electrode material. This mixture may then be shaped by a known processing technique such as extrusion, moulding, blowing or combinations thereof. If a continuous method is desired fibrillation may be effected in the shaping apparatus, for example, rolling apparatus or a twin-screw extruder. With appropriate choice of processing technique the components can be processed directly to a flexible, coherent sheet or bar of the desired thickness. Sheet having a thickness of as little as 1 to 10 mm may be produced and still have structural integrity. Alternatively, the mixture may be made into pellets and used as such, or the pellets may be extruded or blown or injection moulded to a film.

In one embodiment of the method of the invention the components of the mixture are mixed dry, heated and subjected to shear stresses for a time sufficient to convert the fibrillatable polymer into fibrous form. This may be effected in standard polymer processing equipment, and the sheet or film may be formed in one or more steps using one or more types of equipment. For example, the components may be milled, e.g. in a roll mill. During such milling the electrode active material and the pore-forming material may be homogeneously mixed and the fibres distributed throughout the mixture. The product from the mill may be peeled off the rolls in sheet form. The porosity and conductivity of the product may be controlled by using appropriate amounts of pore forming material and conductive carbon respectively.

After shaping, the pore-forming material is removed by leaching the polymeric structure in an appropriate aqueous medium to produce a porous structure in which the particles of electrode material are encradled in a complex of fibres. Before use as an electrode the polymeric structure may be combined with a current collector such as a conductive film, grid or mesh.

An example of the method of the invention will now be given by way of illustration.

### EXAMPLE

This Example illustrates the use of a rolling mill to carry out the process of the present invention. The components used in the method are listed below in order of addition to the mill.

| | | |
|---|---|---|
| 1. | Support polymer | -Polyethylene |
| 2. | Pore-forming material | -Polyethylene oxide |
| 3. | Fibrillatable polymer | -Polytetrafluoroethylene |
| 4. | Conductive carbon | -Carbon black |
| 5. | Electrode material | -$MnO_2$ |

A two-roll rubber mill was used with the mill processing temperature set at 75°C. 10 grams of polyethylene and 80 grams of polyethylene oxide (Union Carbide Polyox WRSN-10) were added to the running mill. When the resin had formed a band, a 2 gram charge of PTFE (du Pont TEFLON 6A) was added slowly and permitted to join the resin band. The material was scraped from the mill and refolded to make a homogeneous mixture. Then, 15 grams of carbon black (Shawinigan black) were slowly sifted into the band and allowed to be taken up into the resin. The material was again scraped and folded until a smooth plastic band was observed. Thereafter, 105 grams of dry $MnO_2$ powder were slowly sifted into the mixture on the mill allowing time for the active material and resin to mix and band. The temperature was carefully monitored and controlled at $75^{\circ}C$ since at this point in the processing the mixture was heat sensitive. The roll nip was 0.025 cm. For the components used, a higher mill temperature could lead to an uncontrollable exotherm and ignition. The mixture behaved in a safe manner for mixing and sheeting, but was not allowed to remain on the mill for any length of time after mixing.

The material coming off the mill was smooth and peeled from the mill surface. It was also soft and flexible, and strong enough to allow it to be trimmed to size without cracking at the edges. The material could be safely stored at this stage.

The polyethylene oxide was then removed by leaching with hot tap water. After leaching was complete, the porous polymeric structure produced was dried in air (leaving approximately 1% moisture in the mix).

The dry, porous polymeric structure thus produced was found to absorb both alkaline and acid electrolytes rapidly, and to wet out completely. The polymeric structure could, if desired, be bonded to a wire screen or grid prior to use.

Electrodes fabricated according to the invention using $PbO_2$, $Ni(OH)_2$, or CdS as the electrode material instead of $MnO_2$, are found to have processing and handling characteristics similar to the $MnO_2$ electrode whose manufacture is described above.

The invention also specifically includes the use of a conductive polymeric structure as described above as an electrode in an electrochemical cell.

## Claims

1.      A method of preparing a conductive polymeric structure comprising a particulate electrode material encradled in a porous, fibre-containing polymeric material,which method includes the steps of dry processing the electrode material, a polymeric pore-forming material which is soluble in aqueous media, a support polymer and a fibrillatable polymer to fibrillate the latter and form a homoegeneous mixture and dissolving out the pore-forming material.

2.      A method as claimed in claim 1, wherein the fibrillatable polymer is fibrillated in the presence of the electrode material, the pore-forming material and the support polymer.

3.      A method as claimed in claim 2, wherein the pore-forming material is a processing agent for the fibrillatable polymer.

4.      A method as claimed in any preceding claim wherein the pore-forming material constitutes from 70 to 80% by volume of the mixture.

5.      A method as claimed in any preceding claim wherein the pore-forming material is polyethylene oxide, polypropylene oxide or a mixture thereof.

6.      A method as claimed in any preceding claim wherein the fibrillatable polymer is polytetrafluoroethylene or polypropylene.

7.      A method as claimed in any preceding claim wherein the support polymer is thermoplastic.

8.      A method as claimed in claim 7, wherein the support polymer is polyethylene.

9.      A method as claimed in any preceding claim, wherein the polymeric structure is prepared in particulate form.

10.      A method as claimed in any one of claims 1 to 9, wherein the polymeric structure is prepared in sheet form.

11. A mixture as claimed in any preceding claim, wherein the mixture includes conductive carbon.

12. A method as claimed in any preceding claim, wherein after removal of the pore-forming material, the electrode material and any conductive carbon together constitute from 70 to 99% by weight of the polymeric structure.

13. A method as claimed in any preceding claim, wherein the electrode material is silver, carbon manganese, lead, nickel, cadmium, a platinum group metal or a mixture, compound or alloy of two or more of these elements.

14. A method as claimed in claim 13, wherein the polymeric structure includes manganese dioxide as electrode material.

15. Use of a conductive polymeric structure produced by a method as claimed in any one of the preceding claims as an electrode in an electrochemical cell.